# FASCICULE DE BREVET EUROPEEN

(11) **EP 3 101 311 B1**
(45) Date de publication et mention de la délivrance du brevet: **27.09.2017**
(21) Numéro de dépôt: 16168815.5
(22) Date de dépôt: 09.05.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 12.05.2015 FR 1554235
(43) Date de publication de la demande: 07.12.2016
(73) Titulaire: Valeo Embrayages, 80009 Amiens Cedex 2 (FR)
(72) Inventeur: VERHOOG, Roel, 60190 GOURNAY SUR ARONDE (FR)
(74) Mandataire: Cardon, Nicolas

(56) Documents cités:
- WO-A1-2013/057440
- WO-A2-2011/076169
- DE-A1-102006 028 556

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Des chocs axiaux peuvent se produire entre les corps pendulaires et le support. Ces chocs peuvent occasionner une usure prématurée des éléments mentionnés ci-dessus du dispositif d'amortissement et/ou générer des bruits non souhaités, notamment lorsque ces éléments sont en métal.

Afin d'éviter la survenue de tels chocs, il est par exemple connu de la demande DE 10 2006 028 556 de prévoir sur chaque organe de roulement une collerette interposée axialement entre la portion de l'organe de roulement roulant sur une masse pendulaires et la portion de l'organe de roulement roulant sur le support, de manière à maintenir un écart axial entre le support et cette masse pendulaire. Un tel organe de roulement présente un certain encombrement axial et les collerettes sont fragiles. Cette demande DE 10 2006 028 556 enseigne par ailleurs de prévoir sur chaque masse pendulaire des patins en plastique interposés axialement entre le support et cette masse pendulaire, afin de maintenir l'écart axial entre eux. De tels patins s'usent rapidement du fait de la pression exercée sur ces derniers, de la vitesse de la masse pendulaire par rapport au support, de la température ou encore du fait de défauts de surface sur le support. Le document WO 2013/057440 A1, considéré comme l'art antérieur le plus pertinent, décrit également un dispositif d'amortissement similaire proposant une solution pour éviter les chocs axiaux. Il existe un besoin pour remédier aux chocs axiaux pouvant se produire entre le support et les masses pendulaires d'un corps pendulaire de façon durable et peu encombrante.

L'invention a pour but de répondre à ce besoin et elle y parvient, selon l'un de ses aspects, à l'aide d'un dispositif d'amortissement d'oscillations de torsion, comprenant :
- un support apte à se déplacer en rotation autour d'un axe,
- au moins un corps pendulaire comprenant : une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses, et
- au moins un organe de roulement guidant le déplacement du corps pendulaire par rapport au support, l'organe de roulement présentant :
   - au moins une première portion ayant un premier diamètre et coopérant avec au moins une piste de roulement solidaire du corps pendulaire, et
   - une deuxième portion ayant un deuxième diamètre inférieur au premier diamètre et coopérant avec une piste de roulement solidaire du support, la première portion étant disposée axialement entre le support et une partie au moins d'une masse pendulaire du corps pendulaire.

Un organe de roulement tel que ci-dessus présente ainsi une première portion qui est interposée axialement entre le support et une masse pendulaire, de manière à maintenir un écart axial entre cette masse pendulaire et le support, et ainsi former une butée axiale pour le déplacement de cette masse pendulaire par rapport au support. En outre, cette première portion a également pour rôle de coopérer avec le corps pendulaire pour guider le déplacement par rapport au support de ce dernier. La mutualisation de ces fonctions par la première portion permet ainsi de réduire la dimension axiale de l'organe de roulement.

Chacune de la première et de la deuxième portion est de préférence un cylindre de section transversale circulaire

La surface extérieure de la première portion de l'organe de roulement peut ainsi rouler sur la piste de roulement solidaire du corps pendulaire tandis que la surface extérieure de la deuxième portion de l'organe de roulement peut rouler sur la piste de roulement solidaire du support.

L'organe de roulement peut présenter deux premières portions, la deuxième portion étant disposée axialement entre les premières portions. Chaque première portion forme alors une butée axiale pour le déplacement d'une des masses pendulaires par rapport au support.

Chaque première portion peut s'étendre jusqu'à une extrémité axiale de l'organe de roulement. Contrairement à ce qui est par exemple divulgué dans la demande DE 10 2006 028 556 précitée, il n'est alors pas nécessaire de prévoir sur l'organe de roulement des portions de roulement s'étendant au-delà des premières portions et jusqu'aux extrémités axiales de l'organe de roulement. On réduit ainsi l'encombrement axial lié aux organes de roulement.

La première portion peut s'étendre sur une première dimension axiale, la deuxième portion sur une deuxième dimension axiale.

Le rapport entre la première dimension axiale et la deuxième dimension axiale peut être compris entre 0,25 et 1, étant par exemple égal à 0,5. Un tel ratio peut conférer à la première portion une dimension permettant à celle-ci de ne pas être dégradée par les forces qui s'exercent sur elle lors du roulement sur la piste de roulement solidaire du corps pendulaire.

Lorsque deux premières portions entourent axialement une deuxième portion, la somme des premières dimensions axiales peut être égale à la deuxième dimension axiale.

Le rapport entre la première dimension axiale et la dimension axiale de l'organe de roulement peut être compris entre 0,15 et 0,3.

Le rapport entre le deuxième diamètre et le premier diamètre est par exemple compris entre 0,3 et 0,95.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale », et
- « solidaire » signifie « rigidement couplé ».

L'organe de liaison est par exemple reçu dans une fenêtre ménagée dans le support. Cette fenêtre peut présenter un contour fermé et une partie de ce contour peut définir la piste de roulement solidaire du support.

La piste de roulement solidaire du corps pendulaire peut être définie par l'organe de liaison. Dans un tel cas, l'organe de liaison peut encore être appelé « entretoise de roulement » ayant à la fois une fonction de solidarisation entre elles des masses pendulaires du corps pendulaire, et une fonction de guidage du roulement de ce corps pendulaire.

Un tel organe de liaison est par exemple emmanché en force via chacun de ses extrémités axiales dans une ouverture ménagée dans une des masses pendulaires.

En variante, l'organe de liaison peut être soudé via ses extrémités axiales sur chaque masse pendulaire.

Lorsque la piste de roulement est solidaire du corps pendulaire, chaque première portion peut être interposée axialement entre le support et la totalité d'une masse pendulaire du corps pendulaire. Autrement dit, il n'existe alors aucun chevauchement axial entre cette première portion et cette masse pendulaire. Dans ce cas, chaque première portion d'un organe de roulement coopère avec différentes parties d'une seule et même piste de roulement définie par l'organe de liaison.

En variante, la piste de roulement solidaire du corps pendulaire peut être définie par une portion d'une masse pendulaire faisant saillie axialement vers le support. Deux pistes de roulement solidaires du corps pendulaire existent alors, chaque d'entre elles étant définie par une portion faisant saillie axialement vers le support depuis une des masses pendulaires du corps pendulaire. Dans ce cas, chaque première portion est interposée axialement entre le support une des masses pendulaires, sauf pour ce qui est de ladite portion faisant saillie. Autrement dit, il existe un chevauchement axial entre cette première portion de l'organe de roulement et la portion de la masse pendulaire faisant saillie axialement vers le support, mais pas entre cette première portion et le reste cette masse pendulaire. Dans cette variante, l'organe de roulement est reçu dans une ouverture du support distincte de la fenêtre recevant l'organe de liaison.

Dans tout ce qui précède, l'organe de roulement peut être uniquement constitué par deux premières portions et par la deuxième portion disposée axialement entre ces premières portions.

En variante, dans tout ce qui précède, l'organe de roulement peut présenter des faces frontales, chaque face frontale étant axialement en regard d'une face d'une masse pendulaire qui est sensiblement perpendiculaire à l'axe de rotation, et des reliefs de forme complémentaire peuvent être ménagés sur chaque face frontale de l'organe de roulement et sur chacune desdites faces des masses pendulaires, ces reliefs venant en contact les uns avec les autres. Au sens de la présente demande, une face frontale de l'organe de roulement est une face qui définit axialement une extrémité de l'organe de roulement. Un pion est par exemple ménagé sur chaque face frontale de l'organe de roulement tandis qu'une rainure de forme complémentaire est ménagée en regard dans chaque face pendulaire axialement en regard de cette face frontale. La coopération entre ces reliefs permet notamment de réduire les frottements liés au contact entre l'organe de roulement et la masse pendulaire, et ainsi de réduire les bruits métalliques associés à ce contact.

Le cas échéant, des chanfreins de forme complémentaire peuvent être ménagés dans chaque face frontale de l'organe de roulement et dans la face de la masse pendulaire axialement en regard de cette face frontale.

L'organe de roulement peut comprendre une troisième portion disposée axialement entre la première portion et la deuxième portion, cette troisième portion présentant un diamètre inférieur au deuxième diamètre, et n'étant pas en contact avec une extrémité axiale de la piste de roulement solidaire du support. Cette troisième portion permet de ménager un espace libre en regard de cette extrémité axiale de la piste de roulement solidaire du support. On évite ainsi un contact entre l'arête vive existant au niveau de cette extrémité axiale de cette piste de roulement et l'organe de roulement. On réduit ainsi le risque d'usure de ces deux pièces.

La troisième portion présente par exemple une forme incurvée, étant alors formée par une succession de diamètres inférieurs au deuxième diamètre.

L'organe de roulement peut présenter une face axialement en regard du support non plane, de manière à ce que seule une fraction de cette face vienne en contact avec le support. Cette face présente par exemple successivement, lorsque l'on se rapproche du premier diamètre un profil concave et un profil convexe. Le sommet du profil convexe peut définir la zone de contact entre ladite face de l'organe de roulement et le support, cette zone de contact étant par exemple linéique voire ponctuelle.

Toujours dans un souci d'éviter un contact entre l'arête vive existant au niveau de l'extrémité axiale du support et l'organe de roulement du support, la fraction de la face de l'organe de roulement en regard du support qui est en contact avec le support peut être à un diamètre strictement supérieur au deuxième diamètre. Un espace vide existe alors entre cette face de l'organe de roulement et l'arête vive du support au niveau du deuxième diamètre.

Dans tout ce qui précède, chaque organe de roulement peut être creux, c'est-à-dire qu'il existe un évidement s'étendant axialement sur toute la longueur de l'organe de roulement au centre de ce dernier.

Dans tout ce qui précède, chaque corps pendulaire peut comprendre deux organes de liaison et deux organes de roulement, chaque organe de roulement étant associé à un organe de liaison.

Chaque corps pendulaire peut comprendre au moins un organe d'amortissement de butée pour une masse pendulaire par rapport au support. Deux organes d'amortissement de butée peuvent être portés par un même corps pendulaire. Chaque organe d'amortissement de butée est par exemple associé à un organe de liaison, étant notamment positionné sensiblement à égale distance de chaque extrémité angulaire de l'organe de liaison.

L'organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple plusieurs corps pendulaires, par exemple un nombre compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

L'invention a encore pour objet, selon un autre de ses aspects, un composant pour système de transmission d'un véhicule automobile, le composant étant notamment un double volant amortisseur, un convertisseur de couple hydrodynamique ou un disque de friction, ou un volant solidaire d'un vilebrequin, ou un double embrayage simple ou humide ou un embrayage simple humide, comprenant un dispositif d'amortissement tel que défini ci-dessus.

Le support du dispositif est notamment choisi parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'exemples non limitatifs de mise en oeuvre de celle-ci et à l'examen du dessin annexé sur lequel :
- la figure 1 représente de façon schématique et en éclaté un dispositif d'amortissement de torsion selon un exemple de mise en oeuvre de l'invention,
- la figure 2 représente le dispositif de la figure 1 lorsqu'il est assemblé,
- la figure 3 est une vue de face du dispositif de la figure 2,
- la figure 4 est une vue en coupe selon IV-IV du dispositif de la figure 3,
- les figures 5 et 6 sont des vues similaires à la figure 4 de deux variantes du dispositif d'amortissement d'oscillations de torsion de la figure 1,
- la figure 7 représente, similairement à la figure 4 une autre variante du dispositif de la figure 1, et
- la figure 8 représente de façon très schématique et partielle une autre variante du dispositif de la figure 1.

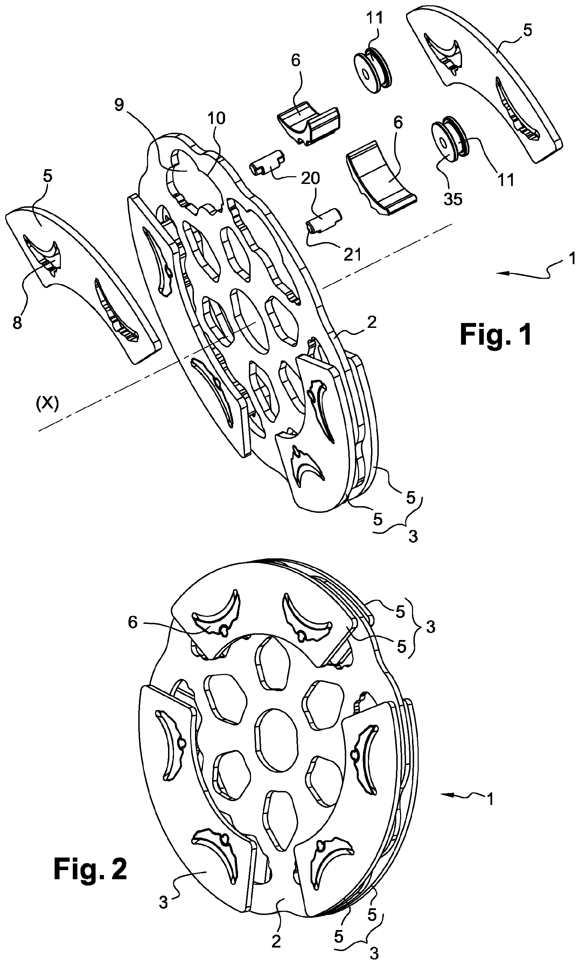

On a représenté sur la figure 1 un dispositif d'amortissement 1 d'oscillations de torsion selon un exemple de mise en oeuvre de l'invention. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur.

Ce composant peut faire partie d'une chaîne de propulsion d'un véhicule automobile, cette dernière comprenant un moteur thermique notamment à trois ou quatre cylindres.

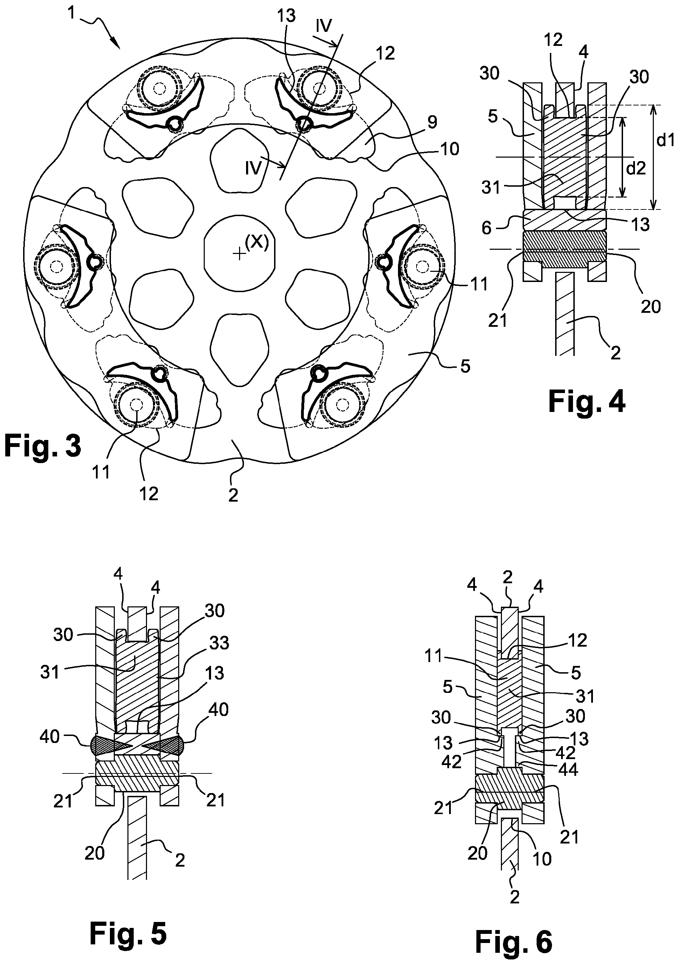

Sur les figures 2 et 3, le dispositif 1 est au repos, c'est-à-dire qu'il ne filtre pas les oscillations de torsion transmises par la chaîne de propulsion du fait des acyclismes du moteur thermique.

De manière connue, un tel double volant amortisseur peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage.

Dans l'exemple considéré, le support 2 présente globalement une forme d'anneau comportant deux côtés opposés 4 qui sont ici des faces planes.

Comme on peut notamment le voir sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement. Dans l'exemple des figures 1 à 4, chaque extrémité d'un organe de liaison 6 est emmanchée en force dans une ouverture 8 ménagée dans une des masses pendulaires 5 du corps pendulaire 3, de manière à solidariser entre elles ces deux masses pendulaires 5.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé 10.

Le dispositif 1 comprend encore dans l'exemple considéré des organes de roulement 11 guidant le déplacement des corps pendulaires 3 par rapport au support 2. Les organes de roulement 11 sont ici des rouleaux présentant plusieurs diamètres successifs différents, comme on le verra par la suite.

Dans l'exemple décrit, le mouvement par rapport au support 2 de chaque corps pendulaire 3 est guidé par deux organes de roulement 11, chacun d'entre eux coopérant dans l'exemple des figures 1 à 5 avec l'un des organes de liaison 6 du corps pendulaire 3.

Dans les exemples considérés, le dispositif 1 comprend des organes d'amortissement de butée 20. Chaque organe de liaison 6 est par exemple associé à un organe d'amortissement de butée 20.

Ces organes d'amortissement de butée 20 peuvent, comme représenté sur la figure 1, être tels que décrits dans la demande déposée en France le 14 octobre 2014 sous le numéro 14 59836. En variante, ces organes d'amortissement de butée 25 peuvent se présenter sous la forme d'une bande ou d'un revêtement entourant dans un plan orthogonal à l'axe de rotation une partie du pourtour de l'organe de liaison 6. Dans l'exemple considéré, chaque organe d'amortissement de butée 20 s'étend entre deux extrémités axiales 21, chaque extrémité axiale 21 étant un picot reçu dans une des masses pendulaires 5, de manière à solidariser cet organe d'amortissement de butée 20 avec ces masses pendulaires d'un corps pendulaire 3.

Ces organes d'amortissement de butée 20 permettent d'amortir les chocs liés à la venue en butée contre le support 2 du corps pendulaire 3 à l'issue d'un déplacement depuis la position de repos, quel que soit le sens de ce déplacement. Un tel déplacement s'effectue dans des plans orthogonaux à l'axe de rotation X, et non axialement. Les organes d'amortissement de butée 20 peuvent par ailleurs permettre d'amortir les chocs liés à la chute radiale du corps pendulaire 3 pour de faibles vitesses de rotation du moteur thermique du véhicule, par exemple lors du démarrage ou de l'arrêt du véhicule.

On va maintenant décrire plus en détail les organes de roulement 11.

Chaque organe de roulement 11 coopère dans l'exemple des figures 1 à 5 d'une part avec une piste de roulement 12 définie par le support 2, et qui est ici formée par une partie du contour 10 de la fenêtre 9, et d'autre part avec une piste de roulement 13 définie par le corps pendulaire 3, et qui est ici formée par une partie du contour extérieur de l'organe de liaison 6.

Plus précisément, chaque organe de roulement 11 interagit au niveau radialement intérieur avec la piste de roulement 13 et au niveau radialement extérieur avec la piste de roulement 12 lors de son déplacement par rapport au support 2 et au corps pendulaire 3, étant alors uniquement sollicité en compression entre les pistes de roulement 12 et 13. Comme représenté par exemple sur la figure 3, les pistes de roulement 12 et 13 présentent dans l'exemple décrit des portions radialement en regard l'une de l'autre.

Chaque organe de roulement 11 présente dans l'exemple considéré deux premières portions 30 ayant un premier diamètre d1 et une deuxième portion 31 ayant un deuxième diamètre d2, inférieur au premier diamètre d1. La deuxième portion 31 est ici interposée entre les deux premières portions 30. La somme de la dimension axiale de chaque première portion 30 est dans l'exemple décrit sensiblement égale à la dimension axiale de la deuxième portion 31.

Toujours dans l'exemple des figures 1 à 5, chaque organe de roulement 11 est constitué par les deux premières portions 30 et par la deuxième portion 31 axialement interposée entre ces premières portions 30. Les faces frontales 35 de chaque organe de roulement 11 sont ici strictement planes, venant en contact de faces 50 des masses pendulaires 5 qui sont perpendiculaires à l'axe de rotation X.

La coopération de l'organe de roulement 11 avec la piste de roulement 12 définie par une partie du contour 10 de la fenêtre du support 2 s'effectue via la surface extérieure de la deuxième portion 31 qui roule sur cette piste de roulement 12. La coopération de l'organe de roulement 11 avec la piste de roulement 13 solidaire du corps pendulaire 3, qui est définie par l'organe de liaison 6 dans l'exemple des figures 1 à 5, s'effectue via la surface extérieure de chaque première portion 30, ces dernières roulant sur des parties distinctes de cette piste de roulement 13.

Comme on peut le voir sur la figure 4, chaque première portion 30 de l'organe de roulement 11, qui assure la fonction de roulement sur la piste de roulement 13, est axialement disposée entre une masse pendulaire 5 et le support 2, de manière à former une butée axiale pour le déplacement de cette masse pendulaire 5 par rapport au support 2.

Le dispositif représenté en partie sur la figure 5 ne diffère de celui qui vient d'être décrit en référence aux figures 1 à 4 que par le fait que chaque organe de liaison 6 n'est plus emmanché en force dans des ouvertures 8 des masses pendulaires 5 mais est solidarisé à ces dernières via des soudures 40.

Le dispositif 1 représenté en partie sur la figure 6 diffère de celui qui a été décrit en référence aux figures 1 à 4 par le fait que deux pistes de roulement 13 solidaires du corps pendulaire 3 sont prévues. Chacune de ces pistes 13 est ici définie par le bord radialement extérieur 42 d'une portion 44 d'une masse pendulaire 5 faisant saillie axialement vers le support 2. Les masses pendulaires 5 de chaque corps pendulaire 3 peuvent alors être reliées par des organes de liaison conventionnels tels que des rivets, ces rivets étant reçus dans des fenêtres du support distinctes de celles recevant les organes de roulement 11. Dans cet exemple, si chaque première portion 30 de l'organe de roulement 11 est bien interposée axialement entre le support 2 et une masse pendulaire 5 moins sa portion 44, il existe un chevauchement axial entre la première portion 30 et cette portion 44 de la masse pendulaire 5.

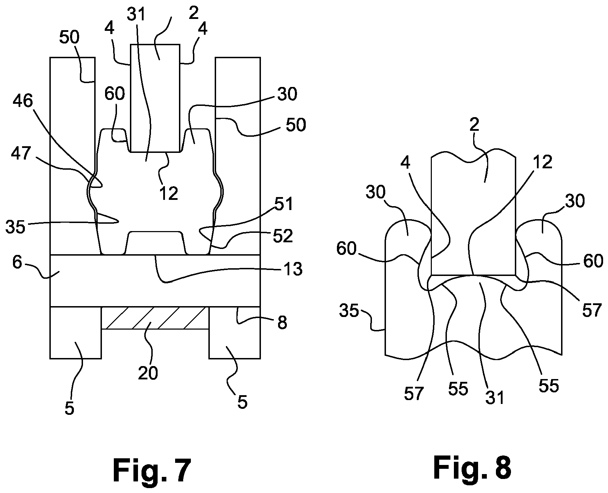

Les exemples des figures 7 et 8, qui vont maintenant être décrits, diffèrent de ceux des figures 1 à 5 notamment en ce que chaque organe de roulement 11 n'est plus seulement constitué par deux premières portions 30 et par la deuxième portion 31 interposée axialement entre ces dernières.

Dans l'exemple de la figure 7, des reliefs de forme complémentaire sont ménagés sur chaque face frontale 35 de l'organe de roulement 11 et sur chaque face 50 d'une masse pendulaire axialement en regard de cette face frontale 35. Un pion 46 s'étend par exemple axialement depuis chaque face frontale 35 de l'organe de roulement et ce pion est reçu dans une rainure 47 de forme complémentaire ménagée dans la masse pendulaire 5 axialement en regard de cette face frontale 35.

Comme on peut également le voir sur la figure 7, des chanfreins de forme complémentaires 51, respectivement 52, peuvent être ménagés dans chaque paire axialement en regard de face frontale 35 de l'organe de roulement 11 et de face 50 de la masse pendulaire 5, et ces chanfreins peuvent venir au contact l'un avec l'autre. Ces chanfreins peuvent être disposés de manière à concentrer le contact entre les faces 35 et 50 à proximité de l'organe de liaison 6.

Comme on peut le voir sur la figure 8, l'organe de roulement 11 peut encore être autre, n'étant pas limité à un organe de roulement uniquement constitué par des portions cylindriques. L'organe de roulement 11 de la figure 8 comprend deux troisièmes portions 55, chaque troisième portion 55 étant interposée axialement entre une première portion 30 et la deuxième portion 31. Cette troisième portion 55 n'est ici pas cylindrique, étant formée par la pluralité de diamètres strictement inférieurs au deuxième diamètre. Comme représenté sur la figure 8, de telles troisièmes portions 55 permettent d'éviter un contact entre l'organe de roulement 11 et les arêtes vives 57 formées par les extrémités axiales de la piste de roulement 12 définie par une partie du contour 10 de la fenêtre 9 ménagée dans le support 2.

Toujours dans ce souci d'éviter un tel contact entre l'organe de roulement 11 et les arêtes vives 57, la face 60 de l'organe de roulement 11 axialement en regard du support 2 et axialement disposée entre la deuxième portion 31 et une première portion 30 peut ne pas être plane. Chaque face 60 est ici creusée, de manière à ne venir au contact d'un côté 4 du support 2 que sur une fraction de cette face 60 et à distance de l'arête vive 57. Le contact entre la face 60 de l'organe de roulement 11 et le côté 4 du support 2 peut alors être un contact linéique, voire ponctuel. Chaque face 60 peut alors présenter d'abord un profil concave puis un profil convexe lorsque l'on se déplace de la troisième portion 55 vers la surface extérieure de la première portion 30. La fraction du bord 60 venant en contact avec le côté 4 du support est alors le sommet de la convexité.

Sur la figure 8, les formes de la troisième portion 55 et de la face 60 ont été exagérées pour la clarté de la description.

L'invention n'est pas limitée aux exemples qui viennent d'être décrits.

## Revendications

1. Dispositif (1) d'amortissement d'oscillations de torsion, comprenant :
- un support (2) apte à se déplacer en rotation autour d'un axe (X),
- au moins un corps pendulaire (3) comprenant : une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et au moins un organe de liaison (6) de la première et de la deuxième masses pendulaires (5) appariant lesdites masses, et
- au moins un organe de roulement (11) guidant le déplacement du corps pendulaire (3) par rapport au support (2), l'organe de roulement (11) présentant :
- au moins une première portion (30) ayant un premier diamètre (d1) et coopérant avec au moins une piste de roulement (13) solidaire du corps pendulaire (3), et
- une deuxième portion (31) ayant un deuxième diamètre (d2), inférieur au premier diamètre (d1), et coopérant avec une piste de roulement (12) solidaire du support (2), la première portion (30) étant disposée axialement entre le support (2) et une partie au moins d'une masse pendulaire (5) du corps pendulaire (3).

2. Dispositif selon la revendication 1, l'organe de roulement (11) présentant deux premières portions (30), la deuxième portion (31) étant disposée axialement entre les premières portions (30).

3. Dispositif selon la revendication 1 ou 2, la piste de roulement (13) solidaire du corps pendulaire (3) étant définie par l'organe de liaison (6), et la première portion (30) étant interposée axialement entre le support (2) et la totalité de la masse pendulaire (5) du corps pendulaire (3).

4. Dispositif selon la revendication 1 ou 2, la piste de roulement (13) solidaire du corps pendulaire (3) étant définie par une portion (44) d'une masse pendulaire (5) faisant saillie axialement vers le support (2), et la première portion (30) étant interposée axialement entre le support (2) et la masse pendulaire (5) sauf pour ce qui est de ladite portion (44) faisant saillie.

5. Dispositif selon l'une quelconque des revendications précédentes, l'organe de roulement (11) présentant des faces frontales (35), chaque face frontale (35) étant axialement en regard d'une face (50) d'une masse pendulaire (5) qui est sensiblement perpendiculaire à l'axe de rotation (X), des reliefs (46, 47 ; 51, 52) de forme complémentaire étant ménagés sur chaque face frontale (35) de l'organe de roulement (11) et sur chacune desdites faces (50) des masses pendulaires (5), ces reliefs venant en contact les uns avec les autres.

6. Dispositif selon l'une quelconque des revendications précédentes, l'organe de roulement (11) comprenant une troisième portion (55) disposée axialement entre la première portion (30) et la deuxième portion (31), cette troisième portion (55) présentant un diamètre inférieur au deuxième diamètre (d2), et n'étant pas en contact avec une extrémité axiale (57) de la piste de roulement (12) solidaire du support (2).

7. Dispositif selon la revendication 6, l'organe de roulement (11) présentant une face (60) axialement en regard du support (2) qui est non plane, de manière à ce que seule une fraction de cette face vienne en contact avec le support (2).

8. Dispositif selon la revendication 7, la fraction de la face (60) de l'organe de roulement (11) en regard du support qui est en contact avec le support (2) étant à un diamètre strictement supérieur au deuxième diamètre (d2).

9. Dispositif selon l'une quelconque des revendications précédentes, chaque corps pendulaire (3) comprenant deux organes de liaison (6) et deux organes de roulement (11), chaque organe de roulement (11) étant associé à un organe de liaison (6).

10. Composant pour système de transmission d'un véhicule automobile, le composant étant notamment un double volant amortisseur, un convertisseur de couple hydrodynamique ou un disque de friction, comprenant un dispositif d'amortissement (1) selon l'une quelconque des revendications 1 à 9.

## Patentansprüche

1. Vorrichtung (1) zur Dämpfung von Torsionsschwingungen, welche umfasst:
- einen Halter (2), der geeignet ist, eine Drehbewegung um eine Achse (X) auszuführen,
- wenigstens einen Pendelkörper (3), welcher umfasst: eine erste und eine zweite Pendelmasse (5), die axial voneinander beabstandet und bezüglich des Halters (2) beweglich sind, wobei die erste Pendelmasse (5) axial auf einer ersten Seite (4) des Halters (2) angeordnet ist und die zweite Pendelmasse (5) axial auf einer zweiten Seite (4) des Halters (2) angeordnet ist, und wenigstens ein Organ zur Verbindung (6) der ersten und der zweiten Pendelmasse (5), das diese Massen zu einem Paar vereinigt, und
- wenigstens einen Wälzkörper (11), der die Bewegung des Pendelkörpers (3) bezüglich des Halters (2) führt, wobei der Wälzkörper (11) aufweist:
- wenigstens einen ersten Abschnitt (30), der einen ersten Durchmesser (d1) aufweist und mit wenigstens einer Laufbahn (13) zusammenwirkt, die mit dem Pendelkörper (3) fest verbunden ist, und
- einen zweiten Abschnitt (31), der einen zweiten Durchmesser (d2) aufweist, welcher kleiner als der erste Durchmesser (d1) ist, und mit einer Laufbahn (12) zusammenwirkt, die mit dem Halter (2) fest verbunden ist, wobei der erste Abschnitt (30) axial zwischen dem Halter (2) und wenigstens einem Teil einer Pendelmasse (5) des Pendelkörpers (3) angeordnet ist.

2. Vorrichtung nach Anspruch 1, wobei der Wälzkörper (11) zwei erste Abschnitte (30) aufweist, wobei der zweite Abschnitt (31) axial zwischen den ersten Abschnitten (30) angeordnet ist.

3. Vorrichtung nach Anspruch 1 oder 2, wobei die Laufbahn (13), die mit dem Pendelkörper (3) fest verbunden ist, durch das Verbindungsorgan (6) definiert ist, und wobei der erste Abschnitt (30) axial zwischen dem Halter (2) und der Gesamtheit der Pendelmasse (5) des Pendelkörpers (3) angeordnet ist.

4. Vorrichtung nach Anspruch 1 oder 2, wobei die Laufbahn (13), die mit dem Pendelkörper (3) fest verbunden ist, durch einen Abschnitt (44) einer Pendelmasse (5) definiert ist, der axial in Richtung des Halters (2) vorsteht, und wobei der erste Abschnitt (30) axial zwischen dem Halter (2) und der Pendelmasse (5) mit Ausnahme dessen, was zu dem vorstehenden Abschnitt (44) gehört, angeordnet ist.

5. Vorrichtung nach einem der vorhergehenden Ansprüche, wobei der Wälzkörper (11) Stirnflächen (35) aufweist, wobei jede Stirnfläche (35) einer Fläche (50) einer Pendelmasse (5) axial gegenüberliegt, welche im Wesentlichen senkrecht zu der Drehachse (X) ist, wobei Reliefs (46, 47; 51, 52) von komplementärer Form auf jeder Stirnfläche (35) des Wälzkörpers (11) und auf jeder der Flächen (50) der Pendelmassen (5) ausgebildet sind, wobei diese Reliefs miteinander in Kontakt kommen.

6. Vorrichtung nach einem der vorhergehenden Ansprüche, wobei der Wälzkörper (11) einen dritten Abschnitt (55) umfasst, der axial zwischen dem ersten Abschnitt (30) und dem zweiten Abschnitt (31) angeordnet ist, wobei dieser dritte Abschnitt (55) einen Durchmesser aufweist, der kleiner als der zweite Durchmesser (d2) ist, und sich nicht in Kontakt mit einem axialen Ende (57) der Laufbahn (12) befindet, die mit dem Halter (2) fest verbunden ist.

7. Vorrichtung nach Anspruch 6, wobei der Wälzkörper (11) eine dem Halter (2) axial gegenüberliegende Fläche (60) aufweist, welche nicht eben ist, so dass nur ein Bruchteil dieser Fläche mit dem Halter (2) in Kontakt kommt.

8. Vorrichtung nach Anspruch 7, wobei der Bruchteil der dem Halter gegenüberliegende Fläche (60) des Wälzkörpers (11), der sich mit dem Halter (2) in Kontakt befindet, einen Durchmesser aufweist, der streng größer als der zweite Durchmesser (d2) ist.

9. Vorrichtung nach einem der vorhergehenden Ansprüche, wobei jeder Pendelkörper (3) zwei Verbindungsorgane (6) und zwei Wälzkörper (11) umfasst, wobei jeder Wälzkörpers (11) einem Verbindungsorgan (6) zugeordnet ist.

10. Komponente für ein Kraftübertragungssystem eines Kraftfahrzeugs, wobei die Komponente insbesondere ein Doppeldämpfungsschwungrad, ein hydrodynamischer Drehmomentwandler oder eine Reibscheibe ist und eine Dämpfungsvorrichtung (1) nach einem der Ansprüche 1 bis 9 umfasst.

## Claims

1. Device (1) for damping torsional oscillations, comprising:
- a support (2) able to move in rotation about an axis (X),
- at least one pendular body (3) comprising: a first and a second pendular mass (5) which are spaced axially apart and are able to move with respect to the support (2), the first pendular mass (5) being arranged axially on a first side (4) of the support (2) and the second pendular mass (5) being arranged axially on a second side (4) of the support (2), and at least one connecting member (6) connecting the first and second pendular masses (5) to pair the said masses, and
- at least one rolling member (11) guiding the movement of the pendular body (3) with respect to the support (2), the rolling member (11) having:
- at least a first portion (30) having a first diameter (d1) and collaborating with at least one runway track (13) secured to the pendular body (3), and
- a second portion (31) having a second diameter (d2), smaller than the first diameter (d1), and collaborating with a runway track (12) secured to the support (2), the first portion (30) being arranged axially between the support (2) and at least part of a pendular mass (5) of the pendular body (3).

2. Device according to Claim 1, the rolling member (11) having two first portions (30), the second portion (31) being arranged axially between the first portions (30).

3. Device according to Claim 1 or 2, the runway track (13) secured to the pendular body (3) being defined by the connecting member (6) and the first portion (30) being interposed axially between the support (2) and the entirety of the pendular mass (5) of the pendular body (3).

4. Device according to Claim 1 or 2, the runway track (13) secured to the pendular body (3) being defined by a portion (44) of a pendular mass (5) that projects axially towards the support (2) and the first portion (30) being interposed axially between the support (2) and the pendular mass (5) except for the said projecting portion (44).

5. Device according to any one of the preceding claims, the rolling member (11) having frontal faces (35), each frontal face (35) axially facing a face (50) of a pendular mass (5) which is substantially perpendicular to the axis of rotation (X), reliefs (46, 47; 51, 52) of complementary shape being formed on each frontal face (35) of the rolling member (11) and on each of the said faces (50) of the pendular masses (5), these reliefs coming into contact with one another.

6. Device according to any one of the preceding claims, the rolling member (11) comprising a third portion (55) arranged axially between the first portion (30) and the second portion (31), this third portion (55) having a diameter smaller than the second diameter (d2) and not being in contact with an axial end (57) of the runway track (12) secured to the support (2).

7. Device according to Claim 6, the rolling member (11) having a face (60) axially facing the support (2) which is non-planar so that only a fraction of this face comes into contact with the support (2).

8. Device according to Claim 7, the fraction of the face (60) of the rolling member (11) facing the support which is in contact with the support (2) being at a diameter strictly greater than the second diameter (d2).

9. Device according to any one of the preceding claims, each pendular body (3) comprising two connecting members (6) and two rolling members (11), each rolling member (11) being associated with a connecting member (6).

10. Component for a motor vehicle transmission system, the component being notably a dual-mass flywheel, a hydrodynamic torque converter or a friction disc, comprising a damping device (1) according to any one of Claims 1 to 9.
